# EUROPÄISCHE PATENTANMELDUNG

(11) **EP 0 604 827 A2**
(43) Veröffentlichungstag der Anmeldung: **06.07.1994**
(21) Anmeldenummer: 93120181.8
(22) Anmeldetag: 15.12.1993
(51) Int. Cl.: G11B 23/28, G11B 23/00

(54) **Werkzeug zum Einformen einer Nut in eine für eine Antriebswelle vorgesehene Aufnahme einer Bandkassette**

(30) Priorität: 30.12.1992 DE 4244632
(71) Anmelder: HARALD MEIER CONSULTING, D-21337 Lüneburg (DE)
(72) Erfinder: Robben, Heinrich, D-35630 Ehringhausen-Daubhausen (DE)
(74) Vertreter: Vonnemann, Gerhard, Dr.-Ing.

(57) **Zusammenfassung**

Die Erfindung betrifft eine Vorrichtung zum Einformen einer ringförmigen Nut in die Seitenfläche einer Öffnung, wobei die Vorrichtung in die Öffnung zur Aufnahme eines Antriebszapfens von Datenträgern, wie beispielsweise Ton- oder Videokassetten, einsetzbar und vorzugsweise manuell betätigbar ausgebildet ist.

## Beschreibung

Die Erfindung betrifft ein Werkzeug zum Einformen einer umlaufenden Nut in Mitnahmestege an einer Innenfläche einer für eine Antriebswelle vorgesehenen Aufnahme einer Bandkassette.

Aus der DE 34 01 543 ist eine Kassette für einen bandförmigen Ton- oder Bildträger, der auf zwei im Kassettengehäuse drehbar gelagerte Spulenrollen aufgewickelt ist, bekannt. Die Spulenrollen derartiger, im nachfolgenden Text allgemein als Datenträger bezeichneter Kassetten, weisen bekanntlich durchgehende Aufnahmen für die Antriebswellen eines Kassettengerätes auf. Kennzeichnend für die bekannte Kassette ist, daß in eine der Aufnahmen ein mittels eines Schlüssels betätigbares Schloß einsetzbar und in Schließstellung darin unlösbar verriegelbar ist.

Damit derartige Schlösser in Kassetten so verriegelt werden können, daß das Schloß die Kassette in der Höhe nicht überragt und nur schwer gewaltsam zu öffnen ist, soll eine Nut innerhalb der Seitenfläche der Aufnahmen der Kassette als Eingriffsfläche für die Verriegelung des Schlosses dienen.

Eine derartige ringförmige Nut in den Aufnahmen von Kassetten kann zwar bei der Fertigung der Kassetten eingeformt werden, fehlt aber bisher üblicherweise.

Der Erfindung liegt die Aufgabe zugrunde, ein Werkzeug anzugeben, mit dem zur verbesserten Arretierung eines solchen Schlosses eine umlaufende Nut in Mitnahmestege an der Innenfläche der für die Antriebswelle vorgesehenen Aufnahme einer Bandkassette eingeformt werden kann.

Gelöst wird diese Aufgabe mit dem eingangs genannten Werkzeug dadurch, daß eine Schneideinrichtung vorgesehen ist, welche in die Aufnahme einführbar ist und mindestens eine gegen die Mitnahmestege gerichtete Schneidkante zum Einformen der Nut durch Drehen des Werkzeugs aufweist.

Ein besonderer Vorteil dieser Lösung ist darin zu sehen, daß die Nut auch nachträglich in bereits im Gebrauch befindliche Kassetten eingeformt werden kann.

Das Werkzeug ist zur Erleichterung der Bedienung vorzugsweise mit einem Hebel zum manuellen Drehen des Werkzeugs versehen, welcher eine gute Angriffsfläche für den Daumen bildet. Gegenüber der alternativen Ausbildung mit einem Handrad bietet der Hebel den Vorteil, daß auch optisch leicht erkennbar ist, über welchen Winkel die Nut eingeformt wurde, so daß ein Nacharbeiten der Nut meist entfällt. Der Hebel ist dabei vorzugsweise in der gleichen Richtung ausgerichtet, wie die Schneidkante, so daß dessen Stellung auch äußerlich leicht erkennbar ist.

Das Werkzeug hat vorzugsweise eine Anschlagfläche zur axialen Festlegung der Lage des Werkzeugs in der Aufnahme der Bandkassette. Dadurch wird bewirkt, daß die Nut immer an der richtigen Stelle der Aufnahme eingeformt wird.

Ferner kann das Werkzeug eine an die Innenfläche der Aufnahme angepaßte Führungsfläche zur radialen Führung des Werkzeugs in der Aufnahme aufweisen. Dadurch wird eine gleichmäßige Tiefe der Nut gewährleistet.

Zur Erleichterung der Betätigung des Werkszeugs kann die Schneideinrichtung beheizbar sein.

Das Werkzeug weist vorzugsweise ein Aufnahmeteil auf, welches mit der Aufnahme der Bandkassette eingreifbar ausgebildet ist und diese während des Einformens der Nut arretiert. Auf diese Weise wird verhindert, daß die Reaktionskräfte während der Betätigung des Werkzeugs auf den Tonträger übertragen werden.

Der Querschnitt des Aufnahmeteils ist dabei vorzugsweise an den Querschnitt der Aufnahme der Bandkassette angepaßt und weist axial verlaufende Stege auf, die zwischen die Mitnahmestege an der Innenfläche der Aufnahme eingreifen.

Das Aufnahmeteil kann weiterhin einen Anschlag zur axialen Festlegung seiner Lage in der Aufnahme der Bandkassette aufweisen.

An dem Aufnahmeteil ist vorzugsweise ein Hebel befestigt, an dessen freiem Ende ein Stützteil vorgesehen ist, welches zur Arretierung der Aufnahme der Bandkassette an eine Seitenfläche der Bandkassette anlegbar ist. Dadurch ist eine besonders einfache Bedienung des Werkzeugs möglich. Mit der einen Hand kann die Kassette gehalten werden, während mit der anderen Hand der Hebel des Werkzeugs bedient wird. Dabei stützt sich das Werkzeug über den Anschlag des Aufnahmeteils an der Kassette ab.

Das Aufnahmeteil bildet schließlich mit dem Werkzeug vorzugsweise eine integrale Baueinheit, wobei die Schneideinrichtung konzentrisch in dem Aufnahmeteil drehbar gelagert ist. Dies ist insbesondere für den Verkauf des Werkzeugs vorteilhaft, da es als eine Einheit verpackt, gelagert und transportiert wird.

Weitere Einzelheiten, Merkmale und Vorteile der Erfindung ergeben sich aus der nachfolgenden Beschreibung eines Ausführungsbeispiels anhand der Zeichnung.

Es zeigt:
Fig. 1 eine Ansicht des Werkzeugs von unten;
Fig. 2 eine Seitenansicht des Werkzeugs;
Fig. 3 eine Ansicht des Aufnahmeteils von unten;
Fig. 4 eine Seitenansicht des Aufnahmeteils;
Fig. 5 eine Aufsicht des Aufnahmeteils;
Fig. 6 das Aufnahmeteil und das Werkzeug als Baueinheit in einer Ansicht von unten und
Fig. 7 das Werkzeug und das Aufnahmeteil als Baueinheit in einem Vertikalschnitt.

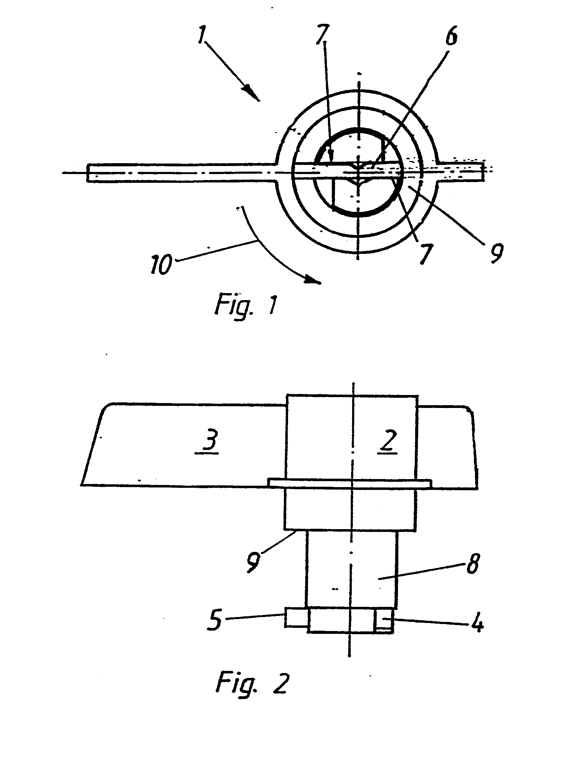

In den Figuren 1 und 2 bezeichnet 1 das Werkzeug. Es besteht im wesentlichen aus einem stufenförmig ausgebildeten Zylinderkörper 2, einem fest mit dem Zylinderkörper 2 verbundenen Hebel 3 und einer Schneideinrichtung 4. Während Hebel 3 und Zylinderkörper 2 vorzugsweise aus einem spritzgießfähigen Material, wie beispielsweise aus thermoplastischem Kunststoff bestehen, wird die Schneideinrichtung 4 vorzugsweise aus Metall, beispielsweise gehärtetem Stahl, hergestellt. Die Schneideinrichtung 4 weist eine Schneidkante 5 auf, deren Breite der Abmessung der einzustechenden Nut entspricht. Die Schneideinrichtung 4 wird innerhalb des Zylinderkörpers 2 in einer entsprechenden Nut 6 aufgenommen, die von Stützflächen 7 berandet ist, über die die auftretenden Schneidkräfte in den Zylinderkörper 2 eingeleitet werden. Befestigt wird die Schneideinrichtung 4 vorzugsweise durch plastisches Verformen der Nut 6, z.B. durch teilweises Aufschmelzen des umgebenden Kunststoffs, um sie so formschlüssig zu befestigen. Radial wird die Lage der Schneideinrichtung 4 durch die zylindrische Führungsfläche 8 festgelegt, die einen gegenüber dem Zylinderkörper 2 verkleinerten Durchmesser aufweist. Den Übergang zwischen der Führungsfläche 8 und der anderen zylindrischen Fläche des Zylinderkörpers 2 bildet eine kreisringförmige Anschlagfläche 9. Diese Anschlagfläche 9 dient gleichzeitig als axiale Anschlagfläche für das Werkzeug und bestimmt somit die axiale Lage der Schneideinrichtung 4 in der Aufnahme einer Kassette. Das notwendige Schneidmoment wird von der Bedienperson manuell mit dem Daumen über einen Hebel 3 in den Zylinderkörper 2 eingeleitet, der dann die Schneideinrichtung 4 in Pfeilrichtung 10 bewegt.

Die Breite der Schneideinrichtung 4, die der Breite der Nut 6 entspricht, ist so gewählt, daß sie zwischen die Mitnahmestege der für eine Antriebswelle vorgesehenen Aufnahme einer Kassette einführbar ist. Durch eine Drehung um 180_{°} wird über den gesamten inneren Umfang der Aufnahme eine Nut eingeformt.

Werden mehrere Schneiden sternförmig angeordnet, so reduziert sich der notwendige Verdrehwinkel zur Einformung einer Nut entsprechend. Dabei steigen jedoch die Schnittkräfte, so daß ein höheres Drehmoment aufzubringen ist, das das Bandmaterial der Kassette stärker belastet. Durch Beheizung der Schneideinrichtung können die Schnittkräfte vorteilhaft verringert werden.

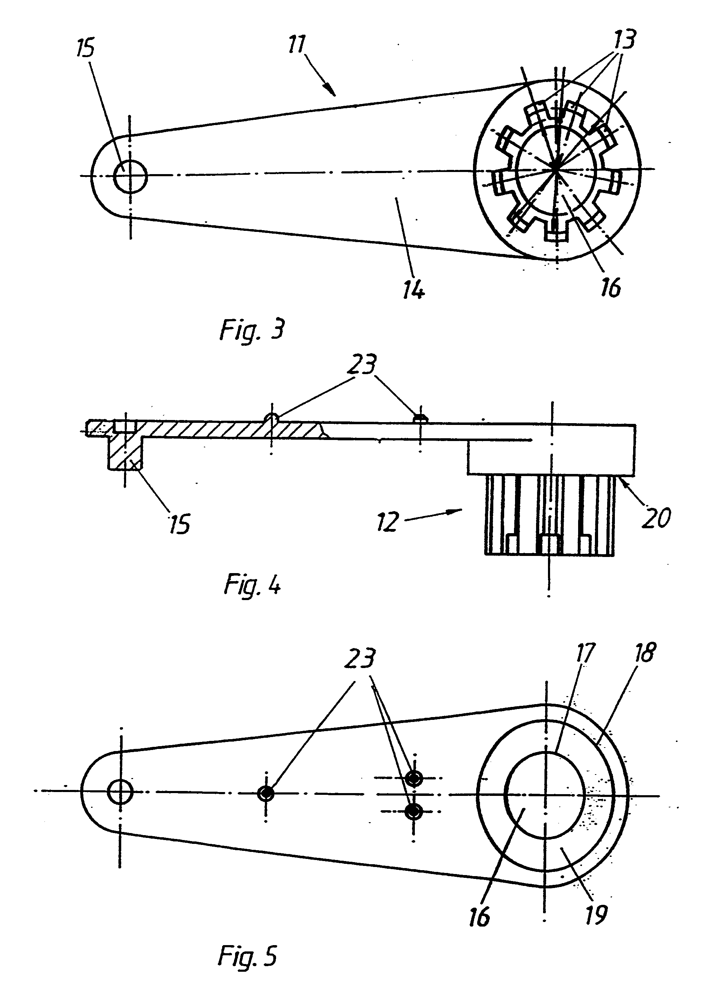

Um zu vermeiden, daß die Reaktionskräfte durch den Schneidvorgang in das Bandmaterial eingeleitet werden, ist ein Aufnahmeteil 11 vorgesehen, daß in den Figuren 3 bis 5 dargestellt ist. Es besteht aus einem Einsteckteil 12 mit Stegen 13 zum Einstecken in die Aufnahme einer Kassette sowie einem fest damit verbundenen Hebel 14 mit einem an seinem freien Ende angeordneten Stützteil 15. Das Einsteckteil 12 ist im Querschnitt an die Aufnahme der Kassette angepaßt, so daß es in diese eingesteckt werden kann. Die Stege 13 greifen dabei in die entsprechenden längsgerichteten Nuten der Aufnahme ein. Der Abstand zwischen den Aufnahmeteil 12 und dem Stützteil 15 ist so gewählt, daß er dem Abstand der Aufnahme von einer Kassettenseite übersteigt, so daß sich bei Verdrehen des Hebels 14 das Stützteil 15 gegen eine Seitenfläche der Kassette anlegen kann. Dadurch ist die Aufnahme der Kassette mindestens in einer Richtung unverdrehbar festgelegt. Die Schnittkräfte beim Einformen der Nut werden von den Stegen des Einsteckteils 12 aufgefangen und in den Hebel 14 eingeleitet, der von dem Stützteil 15 an einer Seitenfläche der Kassette abgestützt ist, so daß das Bandmaterial dabei nicht belastet wird.

Das Aufnahmeteil 11 und das Werkzeug 1 können so gestaltet sein, daß sie von entgegengesetzten Seiten der Kassette in die Aufnahme eingeführt werden können. Zur Erleichterung der Handhabung weist das Aufnahmeteil 11 jedoch im Einsteckteil 12 eine durchgehende Öffnung 16 zur Aufnahme des Werkzeugs 1 auf.

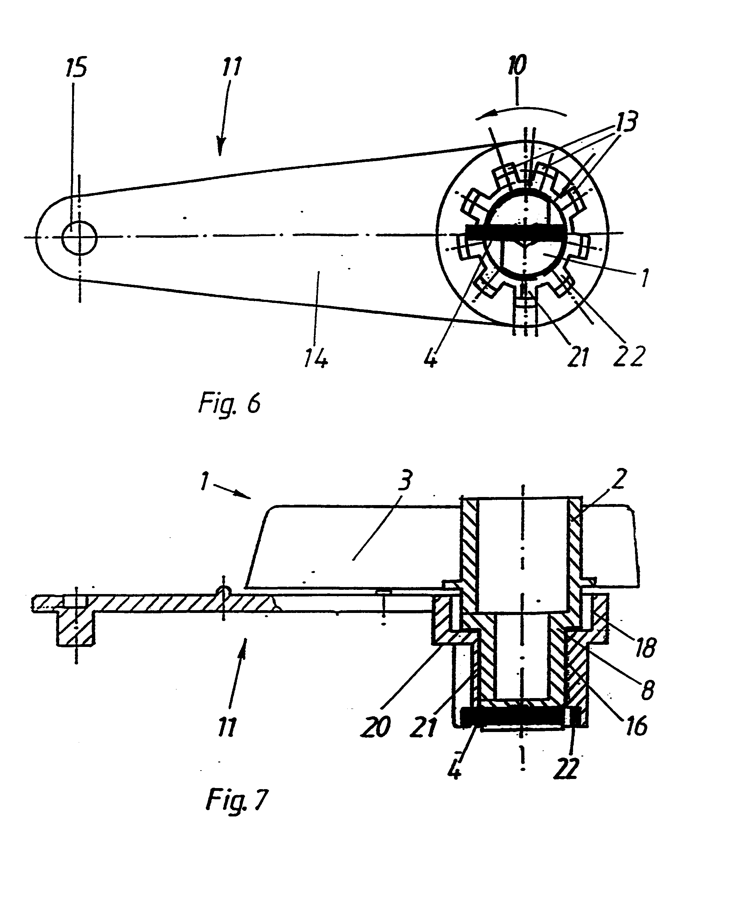

In Figur 6 und Figur 7 sind das Werkzeug 1 und das Aufnahmeteil 11 als Baueinheit dargestellt. Die Öffnung 16 besteht aus zwei zylindrischen Flächen 17 und 18, die über eine ringförmige Stufenfläche 19 ineinander übergehen. Dabei dient die Stufenfläche 19 als Gegenfläche für die Anschlagfläche 9 des in die Öffnung 16 eingesteckten Werkzeugs 1. Die zylindrische Fläche 17 mit dem kleineren Durchmesser dient als Gegenfläche zur Führungsfläche 8 des Werkzeugs 1. Dadurch ist das Werkzeug 1 axial und radial in seiner Lage innerhalb des Aufnahmeteils 11 festgelegt. Zur axialen und radialen Festlegung des Aufnahmeteils 11 weist das Einsteckteil 12 eine ringförmige Anschlagfläche 20 auf, die sich axial auf der Aufnahme der nicht gezeigten Kassette abstützt.

Radial ist das Einsteckteil 12 durch die als Gegenflächen ausgebildeten Stege 13 beziehungsweise den dazwischenliegenden Nuten eines rohrförmigen Abschnitts 21 des Einsteckteils 12 geführt. In der unteren Stirnfläche ist der rohrförmige Abschnitt 21 teilweise nach innen zurückgesetzt, so daß sich eine Stufenfläche 22 bildet, die die Schneideinrichtung 4 in radialer Richtung überragt und gegen die es in axialer Richtung anliegt. Dadurch ergibt sich eine Baueinheit von Werkzeug 1 und Aufnahmeteil 11, die nicht mehr auseinanderfällt.

Montiert wird diese Baueinheit, indem die Öffnung 16 des Aufnahmeteils 11 auf die Führungsfläche 8 des Werkzeugs 1 gesteckt wird. Anschließend wird die Schneideinrichtung 4 in die Nut 6 eingelegt, wobei die Schneidkante 5 der Vorrichtung gegen die innere Fläche eines Steges 13 im Bereich der Zurücksetzung stößt und anschließend in dieser Lage zum Beispiel durch Verkleben oder teilweises Aufschmelzen des die Nut 6 umgebenden Materials unverrückbar festgelegt wird.

Zur Einformung der Nut in die Aufnahme einer Kassette wird das Werkzeug von einer Seite in die für eine Antriebswelle vorgesehene Aufnahme der Kassette eingesteckt. Anschließend wird das Aufnahmeteil solange in Pfeilrichtung 10 gedreht, bis sich das Stützteil 15 gegen eine Wand der Kassette abstützt. Danach wird das Werkzeug von Hand durch Daumendruck in Richtung 10 gegen den Hebel 3 verdreht, bis ein Vollkreis überstrichen ist, wobei die Schneideinrichtung 4 in die Stege der Aufnahme der Kassette eine kreisförmige Nut einformt.

Die Schneideinrichtung 4 ist im Werkzeug 1 in gleicher Winkellage wie der Hebel 3 montiert. Außerdem sind auf der Oberseite des Hebels 14 vom Aufnahmeteil 11 Kontrollmarken 23 angebracht. Wird der Hebel 3 zwischen die innenliegenden Kontrollmarken 23 gestellt, so ist die Schneideinrichtung 4 in einer Position, in der sie mit keinem Steg der Aufnahme beim Einstecken des Aufnahmeteils kollidiert.

### BEZUGSZEICHENLISTE

1 Werkzeug
2 Zylinderkörper
3 Hebel
4 Schneideinrichtung
5 Schneidkante
6 Nut
7 Stützfläche
8 Führungsfläche
9 Anschlagfläche
10 Pfeilrichtung
11 Aufnahmeteil
12 Einsteckteil
13 Steg
14 Hebel
15 Stützteil
16 Öffnung
17 zylindrische Fläche
18 zylindrische Fläche
19 Stufenfläche
20 Anschlagfläche
21 rohrförmiger Abschnitt
22 Stufenfläche
23 Kontrollmarke

## Patentansprüche

1. Werkzeug zum Einformen einer umlaufenden Nut in Mitnahmestege an einer Innenfläche einer für eine Antriebswelle vorgesehenen Aufnahme einer Bandkassette, dadurch gekennzeichnet, daß eine Scheideinrichtung (4), welche in die Aufnahme einführbar ist und mindestens eine gegen die Mitnahmestege gerichtete Schneidkante (5) zum Einformen der Nut durch Drehen des Werkzeuges aufweist.

2. Werkzeug nach Anspruch 1, gekennzeichnet durch einen Hebel (3) zum manuellen Drehen des Werkzeugs (1).

3. Werkzeug nach Anspruch 1 oder 2, gekennzeichnet durch eine Anschlagfläche (9) zur axialen Festlegung der Lage des Werkzeugs in der Aufnahme der Bandkassette.

4. Werkzeug nach mindestens einem der Ansprüche gekennzeichnet durch eine Innenfläche der Aufnahme angepaßte Führungsfläche (8) zur radialen Führung des Werkzeugs in der Aufnahme.

5. Werkzeug nach mindestens einem der vorhergehenden Ansprüche, dadurch gekennzeichnet, daß die Schneideinrichtung (4) beheizbar ist.

6. Werkzeug nach mindestens einem der vorhergehenden Ansprüche, gekennzeichnet durch ein Aufnahmeteil (11), welches mit der Aufnahme der Bandkassette eingreifbar ausgebildet ist und diese während des Einformens der Nut arretiert.

7. Werkzeug nach Anspruch 6, dadurch gekennzeichnet, daß der Querschnitt des Aufnahmeteils (11) an den Querschnitt der Aufnahme der Bandkassette angepaßt ist und axial verlaufende Stege (13) aufweist, die zwischen die Mitnahmestege an der Innenfläche der Aufnahme eingreifen.

8. Werkzeug nach Anspruch 6 oder 7, dadurch gekennzeichnet, daß das Aufnahmeteil (11) einen Anschlag (20) zur axialen Festlegung seiner Lage in der Aufnahme der Bandkassette aufweist.

9. Werkzeug nach mindestens einem der Ansprüche 6 bis 8, dadurch gekennzeichnet, daß an dem Aufnahmeteil (11) ein Hebel (41) befestigt ist, an dessen freien Ende ein Stützteil (15) vorgesehen ist, welches zur Arretierung der Aufnahme der Bandkassette an eine Seitenfläche der Bandkassette anlegbar ist.

10. Werkzeug nach mindestens einem der Ansprüche 6 bis 9, dadurch gekennzeichnet, daß das Aufnahmeteil (11) mit dem Werkzeug (1) eine integrale Baueinheit bildet, wobei die Schneideinrichtung (4) konzentrisch in dem Aufnahmeteil (11) drehbar gelagert ist.
